# EUROPEAN PATENT APPLICATION

(11) **EP 3 644 226 A1**
(43) Date of publication of application: **29.04.2020**
(21) Application number: 19198664.5
(22) Date of filing: 20.09.2019
(51) Int. Cl.: G06K 9/00, G06K 9/46, G06Q 10/08

(54) **ARTICLE RECOGNITION APPARATUS**

(30) Priority: 22.10.2018 JP 2018198568; 22.05.2019 JP 2019096190
(71) Applicant: Toshiba Tec Kabushiki Kaisha, 141-8562 Tokyo (JP)
(72) Inventor: YASUNAGA, Masaaki, Shinagawa-ku,, Tokyo 141-8562 (JP)
(74) Representative: Bandpay & Greuter

(57) **Abstract**

An example article recognition apparatus disclosed herein includes an image interface and a processor. The image interface acquires a photographed image obtained by photographing articles. The processor extracts a plurality of article regions of the articles from the photographed image. The processor extracts, from the article regions, characteristic information indicating characteristics of the article regions, such as sizes, shape, color, or concentration values. And the processor specifies, based on the characteristic information of two article regions adjacent to each other, a boundary of a homogeneous region where articles of a same type are present.

## Description

### FIELD

Embodiments described herein relate generally to an article recognition apparatus.

### BACKGROUND

Some article recognition apparatus may recognize an article, such as a commodity, by taking photographs of an article and recognizing the article photographed in a photographed image. Such an article recognition apparatus recognizes the article from the photographed image using dictionary information corresponding to the article.

The recognition by the article recognition apparatus in the past takes a longer time as the number of kinds of dictionary information increases. Every time types of articles to be recognized increase or decrease, the article recognition apparatus needs to update the dictionary information.

Related art is described in, for example, JP-A-2018-97881.

### SUMMARY OF INVENTION

To solve such problem, there is provided an article recognition apparatus comprising:
an image interface configured to acquire a photographed image obtained by photographing articles; and
a processor configured to
   extract a plurality of article regions of the articles from the photographed image,
   extract, from the article regions, characteristic information indicating characteristics of the article regions, and
   specify articles of same types based on the characteristic information.

The invention also relates to an article recognition apparatus comprising:
an image interface configured to acquire a photographed image obtained by photographing articles;
a storing section configured to store a plurality of image engines for recognizing the articles; and
a processor configured to
   extract an article region of the articles from the photographed image,
   extract, from the article region, characteristic information indicating a characteristic of the article region,
   select an image engine corresponding to the characteristic information out of the plurality of image engines, and
   recognize the articles in the article region using the image engine.

Preferably, the processor is configured to
extract a shelf label of the articles from the photographed image,
read information indicated by the shelf label and specifies a position of the shelf label,
specify, based on characteristic information of two article regions adjacent to each other, a boundary of a homogeneous region where the articles of the same types are present, and
specify, based on a result of the reading of the shelf label, the position of the shelf label, and a position of the homogenous region, the articles present in the homogeneous region.

Preferably still, the processor is configured to plot coordinate points indicating the characteristic information in a coordinate space, divide the coordinate points into groups, and specifies the articles of the same types based on the groups.

Preferably yet, the characteristic information includes concentration of the article region.

Suitably, the characteristic information corresponds to sizes and shapes of the articles.

Suitably still, the characteristic information corresponds to an average color of the articles.

Suitably yet, the article recognition apparatus further comprises:
a moving mechanism configured to move the image interface along the plurality of article regions, wherein the image interface includes a camera operably connected to a control device comprising the processor.

The invention further relates to a method for recognizing articles on a shelf, the method comprising:
acquiring a photographed image;
reading, from the acquired photographed image, a shelf label;
extracting a commodity region from the acquired photographed image, wherein the commodity region includes a plurality of articles;
extracting characteristic information of the plurality of articles; and
specifying, based on the characteristic information, one or more homogeneous region, wherein each of the one or more homogeneous region includes articles having a same characteristic information.

Preferably, the method further comprises:
counting a number of articles in each of the one or more homogeneous region.

Preferably still, the method further comprises:
selecting an image engine configured to process the photographed image;
recognizing, using the selected image engine, commodity information associated with the plurality of articles.

Preferably yet, the method further comprises:
plotting coordinate points based on the extracted characteristic information of the plurality of articles;
dividing coordinate points into one or more groups;
specifying commodities of a same type based on the one or more groups; and
specifying commodity information based on the specified same type.

Suitably, the acquiring a photographed image comprises operating a moving mechanism carrying a camera configured to capture images at various locations relative to the shelf label, wherein the shelf label is located on a shelf.

Suitably still, the characteristic information includes identification of at least one of sizes, shapes, colors, or concentration of the plurality of articles.

The invention further concerns a computer program comprising instructions which, when the program is executed by a computer, cause the computer to carry out the steps of the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram schematically illustrating a configuration example of an article recognition apparatus according to a first embodiment;
FIG. 2 is a block diagram illustrating a configuration example of the article recognition apparatus;
FIG. 3 is a diagram illustrating an operation example of the article recognition apparatus;
FIG. 4 is a flowchart illustrating an operation example of the article recognition apparatus; and
FIG. 5 is a flowchart illustrating an operation example of an article recognition apparatus according to a second embodiment.
FIG. 6 is a diagram illustrating an operation example of an article recognition apparatus according to a third embodiment;
FIG. 7 is a diagram illustrating an operation example of the article recognition apparatus; and
FIG. 8 is a flowchart illustrating an operation example of the article recognition apparatus.

### DETAILED DESCRIPTION

An object of embodiments is to provide an article recognition apparatus that can reduce an update burden and recognize an article at high speed.

An article recognition apparatus according to an embodiment includes an image interface and a processor. The image interface acquires a photographed image obtained by photographing articles. The processor extracts a plurality of article regions of the articles from the photographed image, extracts, from the article regions, characteristic information indicating characteristics of the article regions, and specifies, based on the characteristic information of two article regions adjacent to each other, a boundary of a homogeneous region where articles of a same type are present. Embodiments are explained below with reference to the drawings.

### First Embodiment

First, an article recognition apparatus according to a first embodiment is explained.

The article recognition apparatus according to the first embodiment recognizes articles set in a shelf or the like. The article recognition apparatus self-travels to the front of the shelf or the like and photographs the articles. The article recognition apparatus recognizes the articles from a photographed image according to a predetermined algorithm.
For example, the article recognition apparatus recognizes commodities set in a commodity shelf in a store or the like that sells commodities. The articles recognized by the article recognition apparatus are not limited to a specific configuration.
It is assumed that the article recognition apparatus recognizes the commodities set in the commodity shelf.

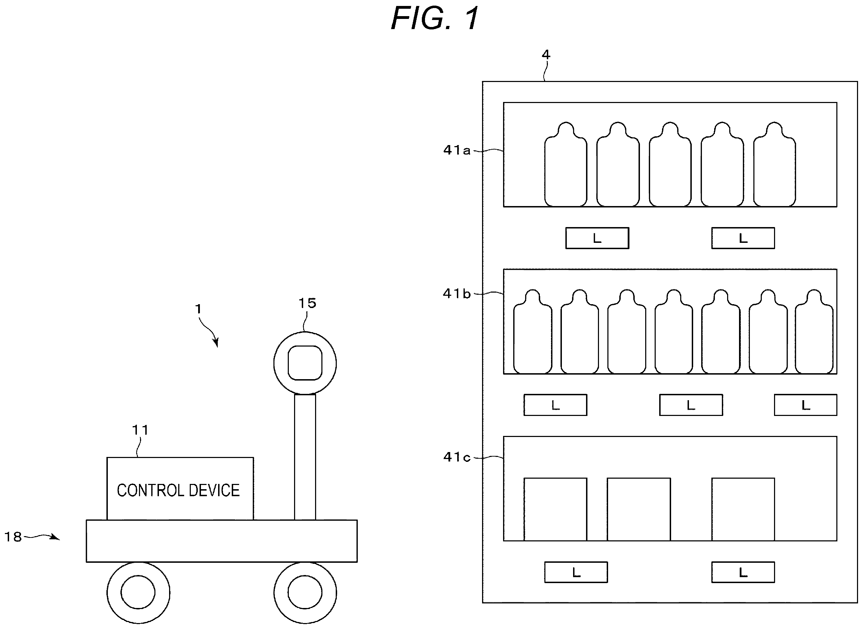

FIG. 1 schematically illustrates a configuration example of an article recognition apparatus 1 and a commodity shelf 4 according to the first embodiment.

The article recognition apparatus 1 includes a control device 11, a camera 15, and a moving mechanism 18.

The control device 11 recognizes commodities based on an image (a photographed image) photographed by the camera 15. The control device 11 is explained in detail below.
The camera 15 photographs the commodity shelf 4. The camera 15 is fixed at a predetermined height in the moving mechanism 18. For example, the camera 15 is fixed to height at which the camera 15 is capable of photographing the upper end to the lower end of the commodity shelf 4.
The camera 15 photographs the commodity shelf 4 according to a signal from the control device 11. The camera 15 transmits a photographed image to the control device 11.

The camera 15 is, for example, a CCD camera.
Camera 15 parameters such as diaphragm, shutter speed, photographing magnification, and the like may be set according to the signal from the control device 11.
The camera 15 may include a light that illuminates the commodity shelf 4.
The moving mechanism 18 is loaded with the control device 11 and the camera 15 to move the control device 11 and the camera 15. For example, the moving mechanism 18 moves the camera 15 in a state in which the camera 15 is fixed at a predetermined height. For example, in the moving mechanism 18, the camera 15 is fixed at height at which the camera 15 is capable of photographing the commodity shelf 4.
The moving mechanism 18 moves according to the signal from the control device 11. For example, the moving mechanism 18 is configured from a motor, wheels, and the like. The moving mechanism 18 drives the motor according to the signal from the control device 11 to drive the wheels. The moving mechanism 18 moves according to driving of the wheels.
The control device 11 and the camera 15 may be connected by radio. For example, the camera 15 may be a camera, a smartphone, a tablet PC, or the like that can be carried.
The article recognition apparatus 1 may not include the moving mechanism 18. For example, the article recognition apparatus 1 may be fixed in a predetermined place. The camera 15 may be fixed in a predetermined place to be capable of photographing a predetermined commodity shelf 4.
The commodity shelf 4 is disposed to be able to present commodities in a store or the like. For example, the commodity shelf 4 stores commodities such that the commodities are presented to the outside.
The commodity shelf 4 includes storage spaces 41a to 41c and shelf labels L.

The storage spaces 41a to 41c store commodities. For example, the storage spaces 41a to 41c are formed such that the commodities can be disposed or taken out from a predetermined surface (the front surface) of the commodity shelf 4. The storage spaces 41a to 41c are respectively formed in a rectangular shape at a predetermined depth. The commodity shelf 4 includes three storage spaces 41. The number and the shape of storage spaces 41 included in the commodity shelf 4 are not limited to a specific configuration.
The shelf labels L indicate information concerning the commodities. For example, the shelf labels L indicate names, prices, or the like of the commodities corresponding to the shelf labels L. The shelf labels L may indicate production areas, discounts, coupons, or the like. The shelf labels L may display codes (e.g., one-dimensional codes or two-dimensional codes) obtained by encoding the information concerning the commodities. The information indicated by the shelf labels L is not limited to a specific configuration.
The shelf labels L indicate information concerning the commodities close to the shelf labels L. For example, the shelf labels L indicate information concerning the commodities located closest to the shelf labels L. The shelf labels L respectively indicate information concerning the commodities present right above the shelf labels L.
The article recognition apparatus 1 is explained.

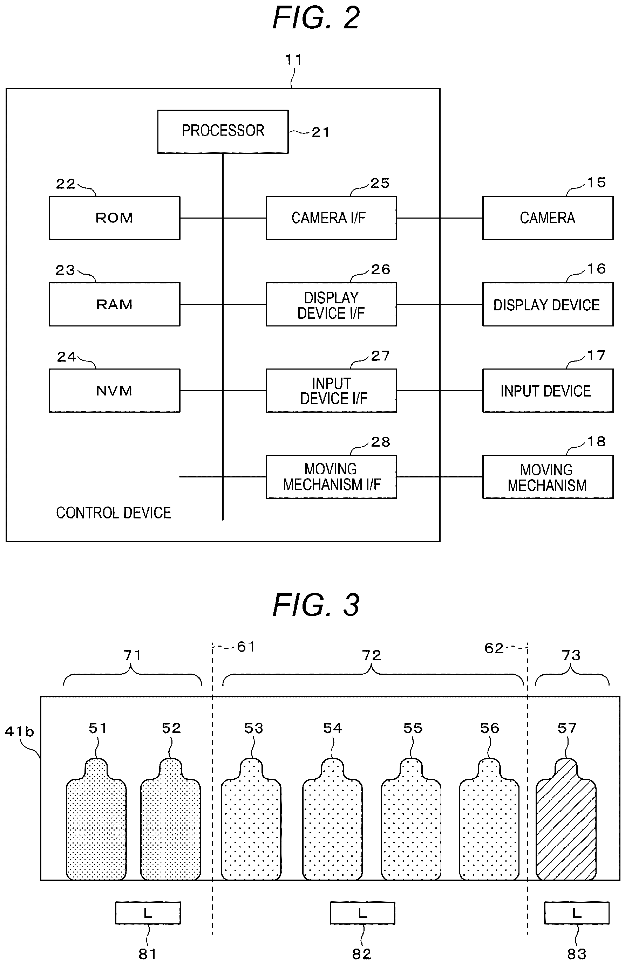

FIG. 2 is a block diagram illustrating a configuration example of the article recognition apparatus 1. As illustrated in FIG. 2, the article recognition apparatus 1 includes the control device 11, the camera 15, a display device 16, an input device 17, and the moving mechanism 18. The control device 11 includes a processor 21, a ROM 22, a RAM 23, an NVM 24 (non-volatile memory), a camera interface 25, a display device interface 26, an input device interface 27, and a moving mechanism interface 28.
The processor 21 is connected to the ROM 22, the RAM 23, the NVM 24, the camera interface 25, the display device interface 26, the input device interface 27, and the moving mechanism interface 28. The camera interface 25 is connected to the camera 15. The display device interface 26 is connected to the display device 16. The input device interface 27 is connected to the input device 17. The moving mechanism interface 28 is connected to the moving mechanism 18.
The article recognition apparatus 1 and the control device 11 may include components according to necessity besides the components illustrated in FIG. 2. Specific components may be excluded from the article recognition apparatus 1 and the control device 11.
The camera 15 and the moving mechanism 18 are as explained above.
The processor 21 has a function of controlling the operation of the entire article recognition apparatus 1. The processor 21 may include an internal cache and various interfaces. The processor 21 executes computer programs stored by the internal memory, the ROM 22, or the NVM 24 in advance to thereby realize various kinds of processing.
A part of various functions realized by the processor 21 executing the computer programs may be realized by a hardware circuit. In this case, the processor 21 controls the functions realized by the hardware circuit.
The ROM 22 is a nonvolatile memory in which a control program, control data, and the like are stored in advance. The control program and the control data stored in the ROM 22 are incorporated in advance according to specifications of the article recognition apparatus 1. The ROM 22 stores, for example, a computer program for controlling a circuit board of the article recognition apparatus 1.
The RAM 23 is a volatile memory. The RAM 23 temporarily stores data and the like during processing of the processor 21. The RAM 23 stores various application programs based on commands from the processor 21. The RAM 23 may store data necessary for execution of application programs, execution results of the application programs, and the like.
The NVM 24 (a storing section) is a nonvolatile memory in which writing and rewriting of data are possible. The NVM 24 is configured from, for example, a HDD (Hard Disk Drive), an SSD (Solid State Drive), or a flash memory. The NVM 24 stores a control program, applications, various data, and the like according to operation use of the article recognition apparatus 1.
The camera interface 25 (an image interface) is an interface for transmitting and receiving data to and from the camera 15. For example, the camera interface 25 transmits, based on the control by the processor 21, a signal for instructing photographing to the camera 15. The camera interface 25 acquires a photographed image obtained by the photographing from the camera 15. For example, the camera interface 25 may support USB connection or may support connection by a camera link. The display device interface 26 is an interface for transmitting and receiving data to and from the display device 16. The display device interface 26 transmits, based on the control by the processor 21, information indicating a screen displayed to an operator to the display device 16. For example, the display device interface 26 may support USB connection or may support connection by a parallel interface.
The input device interface 27 is an interface for transmitting and receiving data to and from the input device 17. The input device interface 27 receives, from the input device 17, a signal indicating operation received from the operator. The input device interface 27 transmits the received signal to the processor 21. For example, the input device interface 27 may support USB connection or may support connection by a parallel interface.
The moving mechanism interface 28 is an interface for transmitting and receiving data to and from the moving mechanism 18. The moving mechanism interface 28 transmits, based on the control by the processor 21, a signal for driving the moving mechanism 18 to the moving mechanism 18. For example, the moving mechanism interface 28 transmits a signal for instructing straight advance, turn, or stop to the moving mechanism 18. The moving mechanism interface 28 may supply electric power to the moving mechanism 18. For example, the moving mechanism interface 28 may support USB connection or may support connection by a parallel interface.
The display device 16 displays various kinds of information according to the control by the processor 21. For example, the display device 16 is configured from a liquid crystal monitor.
The input device 17 receives input of various kinds of operation from the operator. The input device 17 transmits a signal indicating the received operation to the processor 21. For example, the input device 17 is configured from a keyboard, a tenkey, and a touch panel.
If the input device 17 is configured by the touch panel and the like, the input device 17 may be formed integrally with the display device 16.
Functions realized by the article recognition apparatus 1 are explained. The functions realized by the article recognition apparatus 1 are realized by the processor 21 executing computer programs stored in the ROM 22, the NVM 24, or the like.
First, the processor 21 has a function of acquiring a photographed image obtained by photographing the commodity shelf 4.
The processor 21 moves, using the moving mechanism 18, the article recognition apparatus 1 to a position where the commodity shelf 4 can be photographed. The processor 21 may move the article recognition apparatus 1 to a predetermined position based on an instruction from the operator. The processor 21 may move the object recognition apparatus 1 to the predetermined position based on an image photographed by the camera 15.
After moving the article recognition apparatus 1 to the position where the commodity shelf 4 can be photographed, the processor 21 transmits a signal for instructing photographing to the camera 15 through the camera interface 25. The processor 21 may set camera parameters in the camera 15 through the camera interface 25. The processor 21 acquires a photographed image obtained by photographing the commodity shelf 4 from the camera 15 through the camera interface 25.
The processor 21 has a function of reading the shelf label L from the photographed image and specifying the position of the shelf label L.
The processor 21 specifies, from the photographed image, a shelf label region where the shelf label L is photographed. For example, the processor 21 specifies the shelf label region by performing raster scan or the like on the photographed image. After specifying the shelf label region, the processor 21 reads the shelf label L from an image in the shelf label region.
For example, the processor 21 reads characters in the shelf label region with OCR (Optical Character Recognition). If the shelf label L displays a code, the processor 21 may decode the code and read the shelf label L. The processor 21 specifies, from a result of the reading, a commodity indicated by the shelf label L.
The processor 21 specifies the position of the shelf label L (e.g., a predetermined vertex, a center coordinate, or the like of the shelf label region) from the position of the shelf label region.
The processor 21 has a function of extracting, from the photographed image, a plurality of commodity regions (article regions) where the commodity is photographed.

The processor 21 extracts the commodity regions based on the photographed image. For example, the processor 21 may perform edge detection or the like and extract the commodity regions from the photographed image. The processor 21 may extract the commodity regions from the photographed image according to image recognition using AI such as deep learning.
The processor 21 may extract the commodity regions based on distance information indicating a distance from a predetermined reference point or reference plane set on the front surface side of the commodity shelf 4. Regions where the commodities are present (the commodity regions) are closer to the reference point or the reference plane by the width of the commodities. Therefore, the processor 21 specifies, as the commodity regions, regions present at a closer distance from the reference point or the reference plane.
In this case, the article recognition apparatus 1 includes a distance sensor. The distance sensor is formed in a predetermined position of the article recognition apparatus 1. For example, the distance sensor generates distance information in which the position of the distance sensor is set as a reference point. The distance sensor may generate distance information in which a plane perpendicular to a direction in which the distance sensor faces is set as a reference plane.
The processor 21 may extract the commodity regions based on the photographed image and the distance information.

A method of the processor 21 extracting the commodity regions is not limited to a specific method.
The processor 21 has a function of extracting, from a commodity region, characteristic information indicating a characteristic of the commodity region.
The processor 21 extracts an image characteristic of the commodity region as the characteristic of the commodity region. For example, the processor 21 extracts, as a characteristic, a size or a shape (a rectangle, a square, a circle, or the like) of the external shape of the commodity region. The processor 21 may extracts, as a characteristic, a characteristic of an image in the commodity region. For example, the processor 21 extracts a characteristic such as concentration (e.g., average concentration), a pattern (e.g., a local feature value), or a color (e.g., an average color) of the image in the commodity region.
For example, the processor 21 calculates a value (a feature value) indicating the characteristic of the commodity region. The processor 21 generates characteristic information in which the feature value is stored.

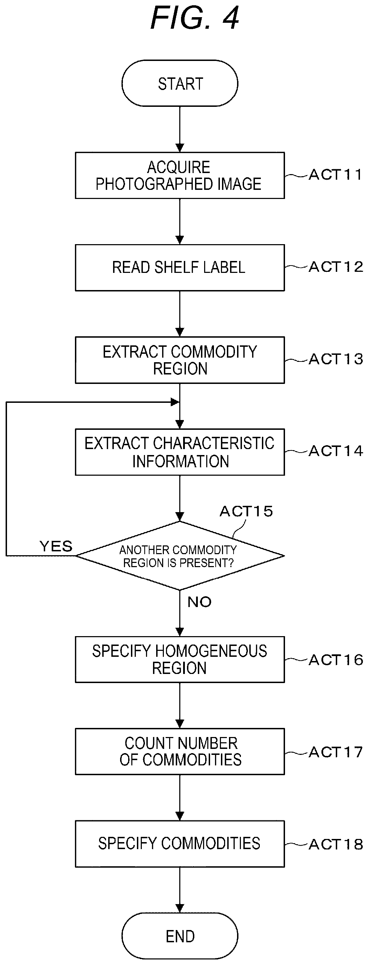

Content of the characteristic and the number of characteristics extracted by the processor 21 are not limited to a specific configuration.
The processor 21 extracts characteristic information concerning the commodity regions.
The processor 21 has a function of specifying, based on the characteristic information of the commodity regions, regions (homogenous regions) where commodities of the same types are present.
FIG. 3 is a diagram for explaining an operation example in which the processor 21 specifies homogeneous regions. FIG. 3 illustrates commodities stored in the storage space 41b. As illustrated in FIG. 3, the storage space 41b stores commodities 51 to 57.
The processor 21 determines whether characteristics indicated by characteristic information of two commodity regions adjacent to each other coincide. For example, if a difference between feature values indicated by the characteristic information is equal to or smaller than a predetermined threshold, the processor 21 determines that the characteristics coincide. For example, if the characteristic information indicates concentration values (values indicating concentration) of images within the commodity regions, the processor 21 determines that the characteristics coincide if a difference between the concentration values is equal to or smaller than the predetermined threshold. The processor 21 may determine, according to a predetermined matching algorism, whether the characteristics coincide.
The processor 21 sets two commodity regions adjacent to each other and determines whether characteristics indicated by characteristic information of the commodity regions coincide. The processor 21 determines, for each adjacent two commodity regions, whether the characteristics indicated by the characteristic information of the commodity regions coincide.
If determining that the characteristics indicated by the characteristic information of the adjacent commodity regions do not coincide, the processor 21 determines that commodities in the commodity regions are commodities of types different from each other. If determining that the characteristics indicated by the characteristic information of the adjacent commodity regions do not coincide, the processor 21 sets a boundary of a homogeneous region between the commodity regions. The processor 21 specifies a region between two boundaries or a region in contact with the boundary on one side (a region between the boundary and the inner wall of the storage space 41b) as the homogeneous region.
In the example illustrated in FIG. 3, the commodities 51 and 52 are commodities of the same type. The commodities 53 to 56 are commodities of the same type. The commodity 57 is a commodity different from the commodities 51 to 56.
In the example illustrated in FIG. 3, the processor 21 determines that characteristics indicated by characteristic information of commodity regions where the commodities 52 and 53 are photographed do not coincide. That is, the processor 21 sets a boundary 61 between the commodity regions of the commodities 52 and 53.
The processor 21 determines that characteristics indicated by characteristic information of commodity regions where the commodities 56 and 57 are photographed do not coincide. The processor 21 sets a boundary 62 between the commodity regions of the commodities 56 and 57.
The processor 21 specifies a region on the left side of the boundary 61 (a region between the boundary 61 and the left side inner wall of the storage space 41b) as a homogeneous region 71. The processor 21 specifies a region between the boundary 61 and the boundary 62 as a homogeneous region 72. The processor 21 specifies a region on the right side of the boundary 62 (a region between the boundary 62 and the right side inner wall of the storage space 41b) as a homogeneous region 73.
The processor 21 has a function of counting the number of commodities in the homogeneous region.
The processor 21 counts, as the number of commodities, the number of commodity regions present in the homogeneous region.
The processor 21 has a function of specifying commodities in a homogeneous region based on the position of the homogeneous region, a reading result of the shelf labels L, and the positions of the shelf labels L. In this case, the threshold for determining whether characteristics indicated by characteristic information of two commodity regions adjacent to each other coincide may be dynamically changed according to information, positions, or the like written on the shelf labels L.
The processor 21 specifies the shelf label L closest to the homogeneous region based on the position of the homogeneous region and the positions of the shelf labels L. After specifying the closest shelf label L, the processor 21 determines that the shelf label L is a shelf label indicating information concerning commodities in the homogeneous region. The processor 21 specifies the commodities in the homogenous region based on a recognition result of the shelf label L. The processor 21 specifies commodities with the shelf label L as the commodities in the homogenous region.
In the example illustrated in FIG. 3, the processor 21 specifies a shelf label L81 as a shelf label of commodities present in the homogeneous region 71. The processor 21 specifies the commodities in the homogenous region 71 from a recognition result of the shelf label L81.
Similarly, the processor 21 specifies commodities present in the homogeneous region 72 from a recognition result of a shelf label L82. The processor 21 specifies commodities present in the homogenous region 73 from a recognition result of a shelf label L83.
An operation example of the article recognition apparatus 1 is explained. FIG. 4 is a flowchart for explaining the operation example of the article recognition apparatus 1.
The processor 21 of the article recognition apparatus 1 acquires, using the camera 15, a photographed image in which the commodity shelf 4 is photographed (ACT 11). After acquiring the photographed image, the processor 21 reads the shelf label L from the photographed image and specifies the position of the shelf label L (ACT 12).
After reading the shelf label L and specifying the position of the shelf label L, the processor 21 extracts a commodity region from the photographed image (ACT 13). After extracting the commodity region, the processor 21 extracts characteristic information indicating characteristics of one commodity region (ACT 14).
After extracting the characteristic information, the processor 21 determines whether another commodity region where characteristic information is not extracted is present (ACT 15). If determining that another commodity region where characteristic information is not extracted is present (YES in ACT 15), the processor 21 returns to ACT 14.
If determining that another commodity region where characteristic information is not extracted is absent (NO in ACT 15), the processor 21 specifies a homogeneous region based on the extracted characteristic information (ACT 16). If specifying the homogeneous region, the processor 21 counts the number of commodities in the homogeneous region (ACT 17).
After counting the number of commodities, the processor 21 specifies commodities present in the homogeneous region (ACT 18). After specifying the commodities present in the homogeneous region, the processor 21 ends the operation.
The processor 21 may acquire image characteristics of commodities of the shelf label L from a database or the like. In this case, the processor 21 may specify commodities in a commodity region based on the image characteristics acquired from the database or the like and specify a homogeneous region.
The processor 21 may not specify commodities in the homogeneous region. In this case, the processor 21 may not read the shelf label L. The processor 21 may not specify the position of the shelf label L.
The moving mechanism 18 may be a truck or the like. In this case, the article recognition apparatus 1 moves according to instructions or input from an operator, such as when the operator pushes the article recognition apparatus 1.
The article recognition apparatus configured as explained above reads shelf labels from a photographed image and specifies the positions of the shelf labels. The article recognition apparatus specifies, from the photographed image, a homogeneous region where commodities of the same type are present. The article recognition apparatus specifies, from the position of the homogenous region and the positions of the shelf labels, a shelf label indicating the commodities in the homogenous region. The article recognition apparatus specifies commodities in the homogeneous region from a result of the reading of the shelf labels. Therefore, the article recognition apparatus can recognize the commodities from the photographed image without depending on image recognition in which dictionary information of commodities is used. Accordingly, in the article recognition apparatus, update work of the dictionary information for recognition is unnecessary even if a recognition target object is changed. Therefore, it is possible to reduce operation cost. With the article recognition apparatus, for example, it is possible to grasp a display or an inventory state in a real store including the number of display rows of commodities without consuming labor and time.

### Second Embodiment

A second embodiment is explained.
The article recognition apparatus 1 according to a second embodiment is different from the article recognition apparatus 1 according to the first embodiment in that the article recognition apparatus 1 according to the second embodiment selects an image engine based on characteristics of a commodity region and recognizes commodities in the commodity region using the selected image engine. Therefore, the other points are denoted by the same reference numerals and signs and detailed explanation of the points is omitted.
A configuration example of the article recognition apparatus 1 according to the second embodiment is the same as the configuration example of the article recognition apparatus 1 according to the first embodiment. Therefore, explanation of the configuration example is omitted.
The NVM 24 stores a plurality of image engines for recognizing commodities from an image of an image region. The plurality of image engines respectively correspond to characteristics of the commodity region.
The image engine recognizes commodities from a commodity region having a predetermined characteristic. The image engine is specialized for recognizing commodities in the commodity region having the predetermined characteristic. For example, the image engine is an engine for recognizing commodities from the commodity region having a predetermined feature value (e.g., a predetermined value or a value from a predetermined value to a predetermined value).
For example, the image engine is an engine that executes a matching technique such as template matching, matching by local feature values, or matching using AI such as deep learning.
The image engine may be a parameter, a network, or the like used for a predetermined matching technique.

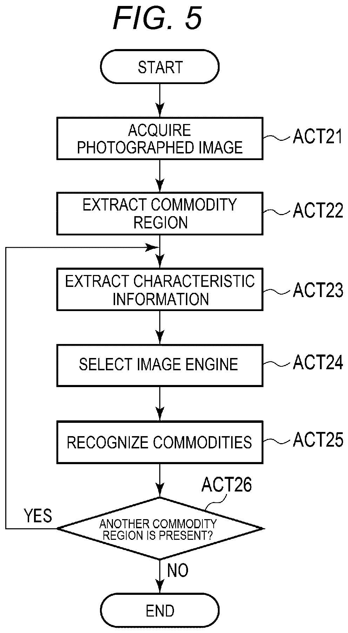

For example, the image engine may use a shape as characteristic information. For example, a plurality of image engines respectively correspond to specific shapes such as a rectangle, a square, or a circle.
The image engine may use a concentration value as characteristic information. For example, the image engine corresponds to a predetermined concentration value (e.g., a concentration value from a predetermined value to a predetermined value).
The image engine may use an average color as characteristic information. For example, the image engine corresponds to a predetermined color code (e.g., a color code from a predetermined value to a predetermined value).
The image engine may correspond to a combination of characteristics.
Content of the image engine and the number of image engines are not limited to a specific configuration.
The image engine is stored in the NVM 24 in advance. The image engine may be updated as appropriate.
Functions realized by the article recognition apparatus 1 are explained. The functions realized by the article recognition apparatus 1 are realized by the processor 21 executing computer programs stored in the ROM 22, the NVM 24, or the like.
The processor 21 realizes the following functions in addition to the functions according to the first embodiment.
The processor 21 has a function of selecting, based on characteristic information of a commodity region, an image engine for recognizing commodities in the commodity region.
The processor 21 acquires a characteristic (e.g., a feature value) from the characteristic information of the commodity region. After acquiring the characteristic, the processor 21 selects an image engine corresponding to the characteristic from the plurality of image engines stored by the NVM 24.
For example, the processor 21 acquires a predetermined concentration value as a characteristic. The processor 21 selects an image engine corresponding to the concentration value out of the plurality of image engines.
The processor 21 has a function of recognizing commodities in the commodity region using the selected image engine.
The processor 21 acquires an image in the commodity region from a photographed image. After acquiring the image, the processor 21 executes recognition processing on the image using the selected image engine. The processor 21 recognizes commodities in the commodity region with the recognition processing.
An operation example of the article recognition apparatus 1 is explained. FIG. 5 is a flowchart for explaining an operation example of the article recognition apparatus 1.
The processor 21 of the article recognition apparatus 1 acquires, using the camera 15, a photographed image in which the commodity shelf 4 is photographed (ACT 21). After acquiring the photographed image, the processor 21 extracts a commodity region from the photographed image (ACT 22). After extracting the commodity region, the processor 21 extracts characteristic information indicating a characteristic of one commodity region (ACT 23).
After extracting the characteristic information, the processor 21 selects an image engine out of a plurality of image engines based on the characteristic information (ACT 24). After selecting the image engine, the processor 21 recognizes commodities in the commodity region using the selected image engine (ACT 25).
After recognizing the commodities in the commodity region, the processor 21 determines whether another commodity region where commodities are not recognized is present (ACT 26). If determining that another commodity region where commodities are not recognized is present (YES in ACT 26), the processor 21 returns to ACT 23.
If determining that another commodity region where commodities are not recognized is absent (NO in ACT 26), the processor 21 ends the operation.
The NVM 24 may include one image engine. In this case, the processor 21 may not extract characteristic information from the commodity region. The processor 21 executes recognition processing on an image in the commodity region.

The processor 21 may count the number of commodities of the same type.
The article recognition apparatus configured as explained above extracts a commodity region from a photographed image. The article recognition apparatus executes recognition processing on an image in the commodity region. As a result, the article recognition apparatus can recognize commodities at higher speed than when the recognition processing is performed on the entire photographed image.
The article recognition apparatus recognizes commodities with an image engine corresponding to a characteristic of the commodity region. Therefore, the article recognition apparatus can use an image engine specialized for an image having the characteristic. Accordingly, the article recognition apparatus can effectively recognize the commodities. If the article recognition apparatus updates a specific image engine, the article recognition apparatus can add a commodity serving as a recognition target. For example, if a set of round articles and a set of square articles are present and a new article is added to the set of square articles, the article recognition apparatus has to update only an image engine that recognizes the set of square articles.

### Third Embodiment

A third embodiment is explained.
The article recognition apparatus 1 according to the third embodiment is different from the article recognition apparatus 1 according to the first embodiment in that characteristic information extracted from commodity regions is divided into a plurality of groups to specify commodities of the same types. Therefore, the other points are denoted by the same reference numerals and signs and detailed explanation of the points is omitted.
Explanation of a configuration example of the article recognition apparatus 1 according to the third embodiment is omitted because the configuration example is the same as the configuration example of the article recognition apparatus 1 according to the first embodiment.
Functions realized by the article recognition apparatus 1 are explained. The functions realized by the article recognition apparatus 1 are realized by the processor 21 executing computer programs stored in the ROM 22, the NVM 24, or the like.
The processor 21 realizes the following functions in addition to the functions according to the first and second embodiments.
First, the processor 21 has a function of extracting, from commodity regions, characteristic information indicating characteristics of the commodity regions.
The processor 21 extracts, from the commodity regions, parameters indicating the characteristics of the commodity regions. The processor 21 generates characteristic information indicating the extracted parameters. The processor 21 generates, as the parameters, characteristic information indicating sizes (areas) and average concentrations of the commodity regions.
The processor 21 has a function of plotting, in a coordinate system, points (coordinate points) indicating the characteristic information.
As explained above, the processor 21 extracts two parameters (the sizes and the average concentrations). The processor 21 plots, in a two-dimensional space, coordinate points having the two parameters respectively as X coordinates and Y coordinates.

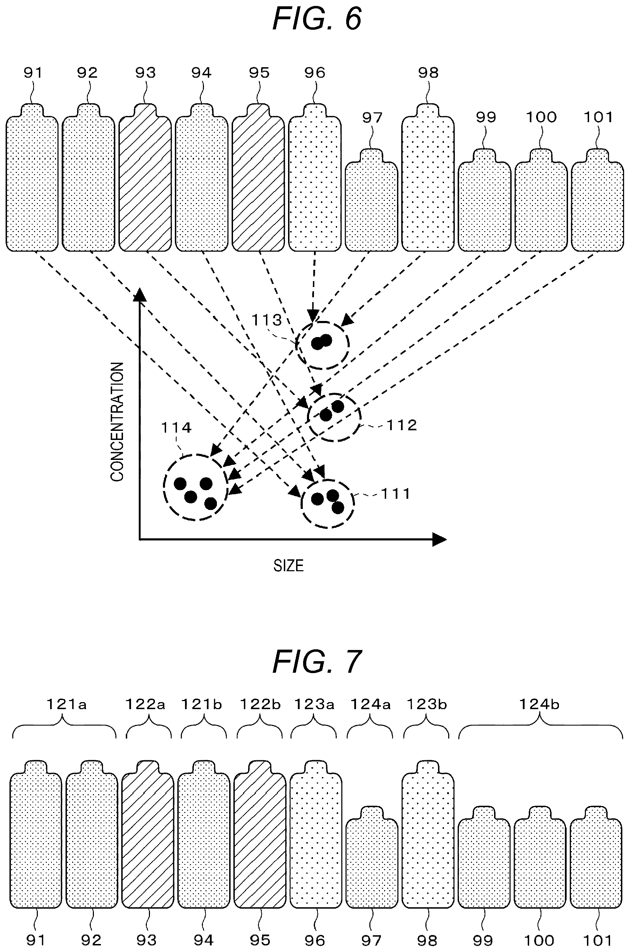

FIG. 6 illustrates an operation example in which the processor 21 plots coordinate points. In the example illustrated in FIG. 6, it is assumed that the processor 21 acquires a photographed image in which commodities 91 to 101 are photographed and extracts commodity regions of the commodities 91 to 101.
The processor 21 extracts, from each of the commodity regions of the commodities 91 to 101, characteristic information indicating sizes and average concentrations as parameters. The processor 21 plots, as coordinate points of the characteristic information, in a two-dimensional space, coordinate points having the sizes and the average concentrations of the characteristic information respectively as X coordinates and Y coordinates. That is, the processor 21 sets an X axis as a size axis and sets a Y axis as an average concentration axis and plots the coordinate points indicating the sizes and the average concentrations.
The processor 21 plots, in the two-dimensional space, the coordinate points indicating the characteristic information extracted from the commodity regions of the commodities 91 to 101.
The processor 21 has a function of dividing the coordinate points into groups based on coordinates of the coordinate points.

For example, the processor 21 divides the coordinate points into groups based on distances among the coordinate points. For example, the processor 21 forms, into one group, a set of points present at distances equal to or smaller than a predetermined threshold from a certain coordinate point.
The processor 21 may divide the coordinate points into groups according to a predetermined algorithm. A method with which the processor 21 divides the coordinate points into groups is not limited to a specific method.
In the example illustrated in FIG. 6, the processor 21 forms, into a group 111, the coordinate points of the characteristic information extracted from the commodity regions of the commodities 91, 92, and 94. The processor 21 forms, into a group 112, the coordinate points of the characteristic information extracted from the commodity regions of the commodities 93 and 95. The processor 21 forms, into a group 113, the coordinate points of the characteristic information extracted from the commodity regions of the commodities 96 and 98. The processor 21 forms, into a group 114, the coordinate points of the characteristic information extracted from the commodity regions of the commodities 97, and 99 to 101.
The processor 21 has a function of specifying commodities of the same types based on the groups of the coordinate points.

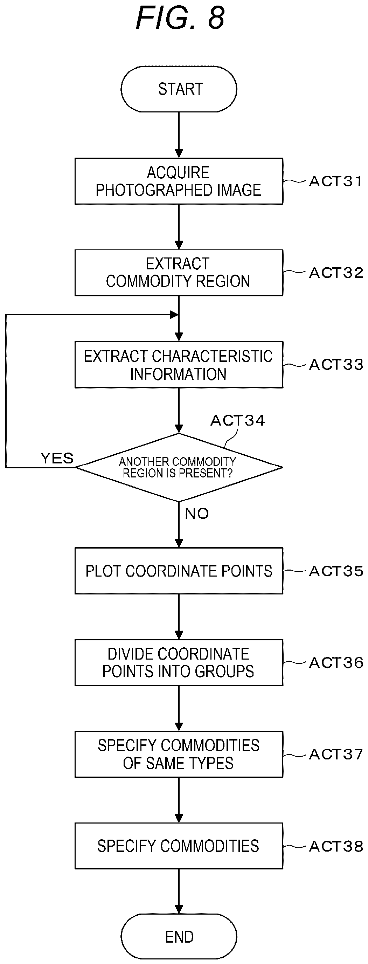

That is, the processor 21 specifies, as the commodities of the same types, commodities in the commodity regions corresponding to the coordinate points belonging to the same groups.
In the example illustrated in FIG. 6, the processor 21 specifies the commodities 91, 92, and 94 as commodities of the same type. The processor 21 specifies the commodities 93 and 95 as commodities of the same type. The processor 21 specifies the commodities 96 and 98 as commodities of the same type. The processor 21 specifies the commodities 97, and 99 to 101 as commodities of the same type.
The processor 21 may specify homogenous regions. FIG. 7 illustrates an example of homogeneous regions specified by the processor 21.
In the example illustrated in FIG. 7, the processor 21 specifies a homogenous region 121 configured from a region 121a and a region 121b (a homogenous region including the commodities 91, 92 and 94). The processor 21 specifies a homogenous region 122 configured from a region 122a and a region 122b (a homogenous region including the commodities 93 and 95). The processor 21 specifies a homogenous region 123 configured from a region 123a and a region 123b (a homogenous region including the commodities 96 and 98). The processor 21 specifies a homogenous region 124 configured from a region 124a and a region 124b (a homogenous region including the commodities 97, 99, and 101).
An operation example of the article recognition apparatus 1 is explained. FIG. 8 is a flowchart for explaining the operation example of the article recognition apparatus 1. The processor 21 of the article recognition apparatus 1 acquires, using the camera 15, a photographed image in which the commodity shelf 4 is photographed (ACT 31). After acquiring the photographed image, the processor 21 extracts commodity regions from the photographed image (ACT 32). After extracting the commodity regions, the processor 21 extracts characteristic information indicating a characteristic of one commodity region (ACT 33). After extracting the characteristic information, the processor 21 determines whether another commodity region where characteristic information is not extracted is present (ACT 34). If determining that another commodity region where characteristic information is not extracted is present (YES in ACT 34), the processor 21 returns to ACT 33.
If determining that another commodity region where characteristic information is not extracted is absent (NO in ACT 34), the processor 21 plots coordinate points of the characteristic information (ACT 35). After plotting the coordinate points of the characteristic information, the processor 21 divides the coordinate points into groups (ACT 36).
After dividing the coordinate points into the groups, the processor 21 specifies commodities of the same types based on the groups (ACT 37). After specifying the commodities of the same types, the processor 21 specifies commodities (ACT 38).

After specifying the commodities, the processor 21 ends the operation.
The characteristic information may indicate one parameter or may indicate three or more parameters.

If the characteristic information indicates one parameter, the processor 21 may plot a coordinate point of the characteristic information on a number line (one coordinate axis).

If the characteristic information indicates three or more parameters, the processor 21 may plot coordinate points of the characteristic information in a coordinate system of three or more dimensions.
The article recognition apparatus configured as explained above plots coordinate points indicating characteristic information in a coordinate space and specifies commodities of the same type. As a result, the article recognition apparatus can specify commodities not adjacent to each other as commodities of the same type.
The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An article recognition apparatus comprising:
an image interface configured to acquire a photographed image obtained by photographing articles; and
a processor configured to
extract a plurality of article regions of the articles from the photographed image,
extract, from the article regions, characteristic information indicating characteristics of the article regions, and
specify articles of same types based on the characteristic information.

2. An article recognition apparatus comprising:
an image interface configured to acquire a photographed image obtained by photographing articles;
a storing section configured to store a plurality of image engines for recognizing the articles; and
a processor configured to
extract an article region of the articles from the photographed image,
extract, from the article region, characteristic information indicating a characteristic of the article region,
select an image engine corresponding to the characteristic information out of the plurality of image engines, and
recognize the articles in the article region using the image engine.

3. The article recognition apparatus according to claim 1 or 2, wherein the processor is configured to
extract a shelf label of the articles from the photographed image,
read information indicated by the shelf label and specifies a position of the shelf label,
specify, based on characteristic information of two article regions adjacent to each other, a boundary of a homogeneous region where the articles of the same types are present, and
specify, based on a result of the reading of the shelf label, the position of the shelf label, and a position of the homogenous region, the articles present in the homogeneous region.

4. The article recognition apparatus according to any one of claims 1 to 3, wherein the processor is configured to plot coordinate points indicating the characteristic information in a coordinate space, divide the coordinate points into groups, and specifies the articles of the same types based on the groups.

5. The article recognition apparatus according to any one of claims 1 to 4, wherein the characteristic information includes concentration of the article region.

6. The article recognition apparatus according to any one of claims 1 to 5, wherein the characteristic information corresponds to sizes and shapes of the articles.

7. The article recognition apparatus according to any one of claims 1 to 6, wherein the characteristic information corresponds to an average color of the articles.

8. The article recognition apparatus according to any one of claims 1 to 7, further comprising:
a moving mechanism configured to move the image interface along the plurality of article regions, wherein the image interface includes a camera operably connected to a control device comprising the processor.

9. A method for recognizing articles on a shelf, the method comprising:
acquiring a photographed image;
reading, from the acquired photographed image, a shelf label;
extracting a commodity region from the acquired photographed image, wherein the commodity region includes a plurality of articles;
extracting characteristic information of the plurality of articles; and
specifying, based on the characteristic information, one or more homogeneous region, wherein each of the one or more homogeneous region includes articles having a same characteristic information.

10. The method of claim 9, further comprising:
counting a number of articles in each of the one or more homogeneous region.

11. The method of claim 10, further comprising:
selecting an image engine configured to process the photographed image;
recognizing, using the selected image engine, commodity information associated with the plurality of articles.

12. The method of any one of claims 9 to 11, further comprising:
plotting coordinate points based on the extracted characteristic information of the plurality of articles;
dividing coordinate points into one or more groups;
specifying commodities of a same type based on the one or more groups; and
specifying commodity information based on the specified same type.

13. The method of any one of claims 9 to 12, wherein acquiring a photographed image comprises operating a moving mechanism carrying a camera configured to capture images at various locations relative to the shelf label, wherein the shelf label is located on a shelf.

14. The method of any one of claims 9 to 13, wherein the characteristic information includes identification of at least one of sizes, shapes, colors, or concentration of the plurality of articles.

15. A computer program comprising instructions which, when the program is executed by a computer, cause the computer to carry out the steps of the method according to any one of claims 9 to 14.
